# EUROPEAN PATENT APPLICATION

(11) **EP 3 476 544 A1**
(43) Date of publication of application: **01.05.2019**
(21) Application number: 18201651.9
(22) Date of filing: 19.10.2018
(51) Int. Cl.: B25H 1/08, A47B 13/00

(54) **TOOLS AND METHOD FOR SUPPORTING WORKPIECES ABOVE A WORKING SURFACE**

(30) Priority: 24.10.2017 US 201715792369
(71) Applicant: Lee Valley Tools Ltd., Ottwa, Ontario K2H 1C2 (CA)
(72) Inventor: Henderson, Jeffrey J, Carlton Place, Ontario K7C 0C4 (CA); Lee, Robin C, Ottawa, Ontario K2H 1C2 (CA); McFarlane, James Alexander, Toronto, Ontario M2N 1S9 (CA)
(74) Representative: Phillips & Leigh LLP

(57) **Abstract**

An assembly of structures that enables work to be performed on workpieces (240, 340) without causing damage to a base surface is described. Apparatus comprising:-
• a platform (101) comprising a top side (116), a bottom side (103), and two opposite walls (102) extending from the top side of the platform, wherein the two opposite walls define a channel (120) and are disposed about a central longitudinal axis,
• and a fastening structure (490-492) extending in use from the bottom side .

## Description

### Field of the Invention

The present invention is related to easy to set up assembly of structures that can be used to be perform work on one or more workpiece or work item without causing damage to a base surface under the workpiece.

### Background

A challenge faced by woodworkers is the need to elevate their workpiece in order to ensure that there is clearance beneath it.

Historically, this type of problem has been solved using saw horses. The drawback of this solution is that saw horses can be relatively cumbersome and unstable in use and occupy a significant amount of space when being stored.

Alternate solutions in the form of standoff devices (e.g., bench cookies or painters pyramids) provide minimal support due to their small size. It is also awkward and relatively costly to use a sufficient number of such standoffs to support both a workpiece and any offcut.

One commonly used solution is to use a sheet of closed cell foam or plywood as a sacrificial member beneath the workpiece. Storage of closed cell foam as a sacrificial sheet is relatively expensive and makes it a relatively space-intensive solution.

### Figures

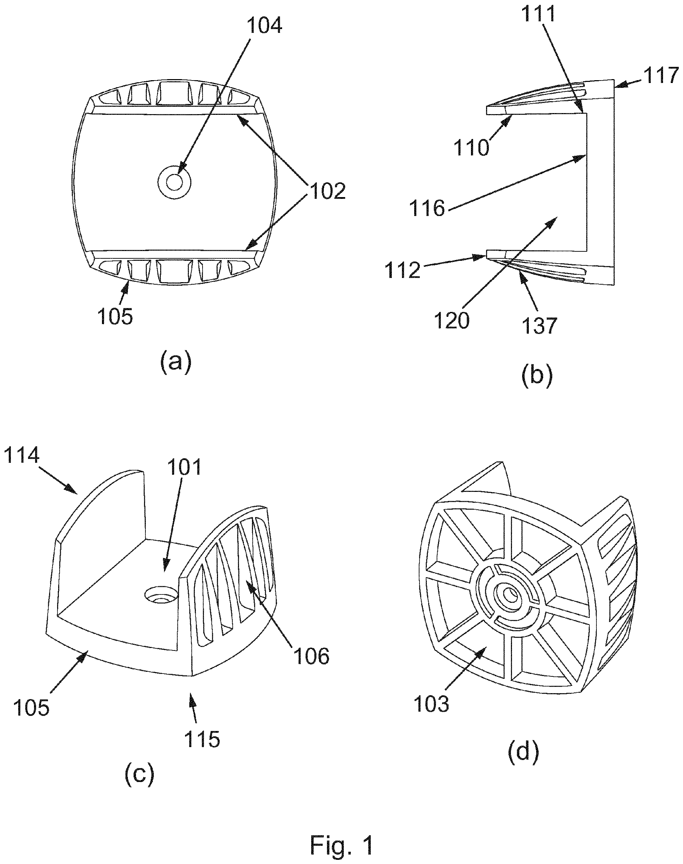

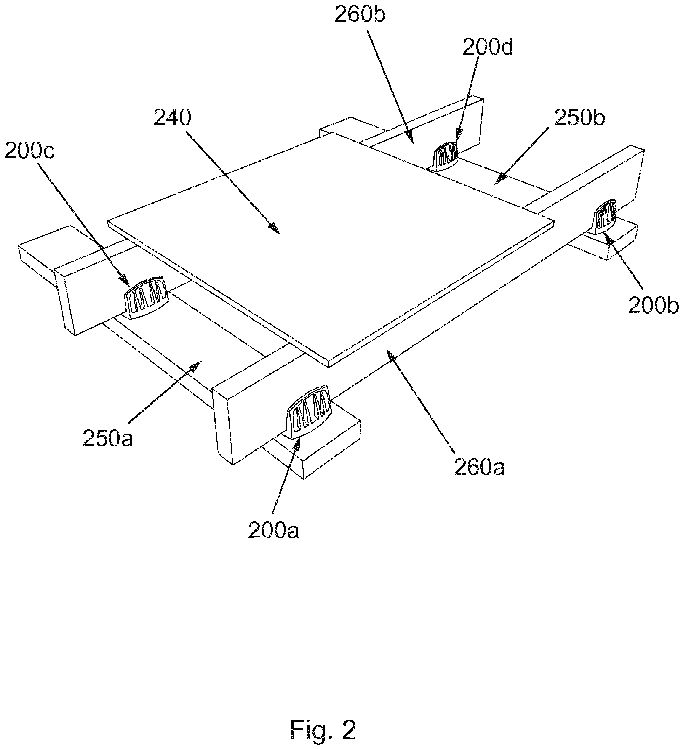

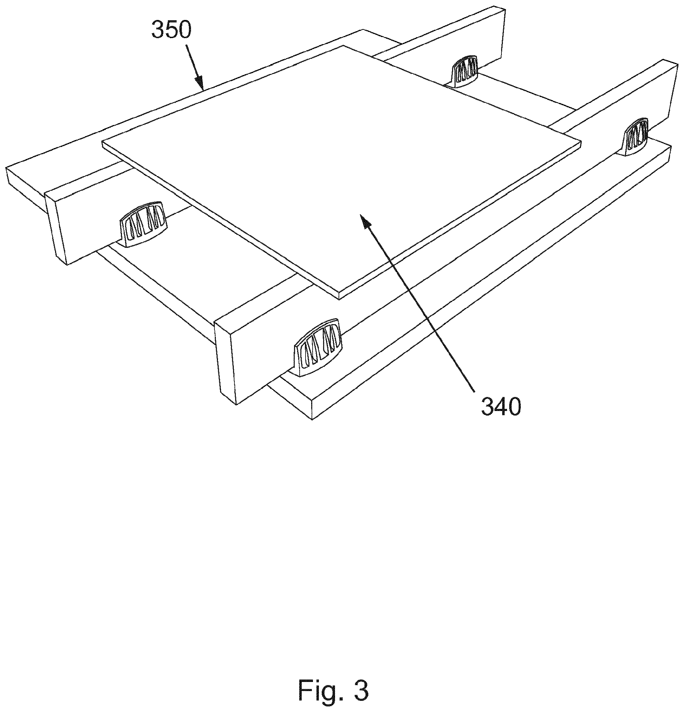

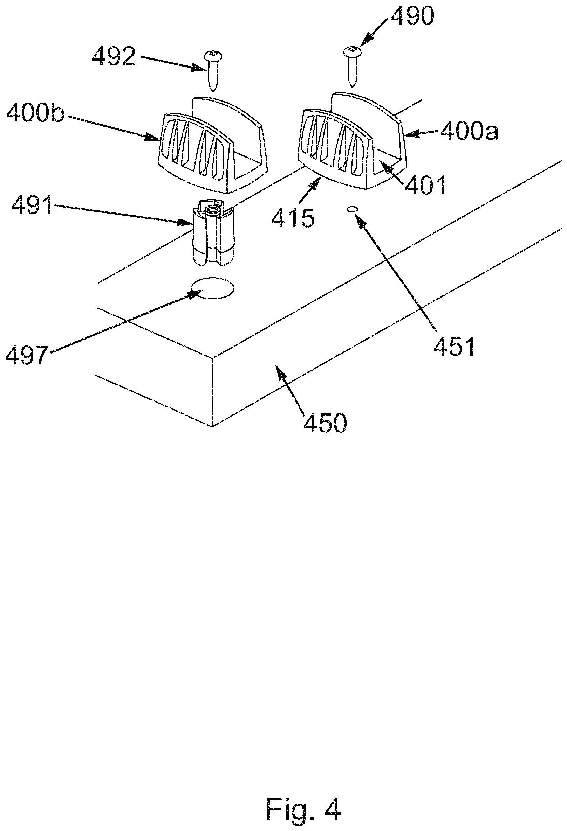

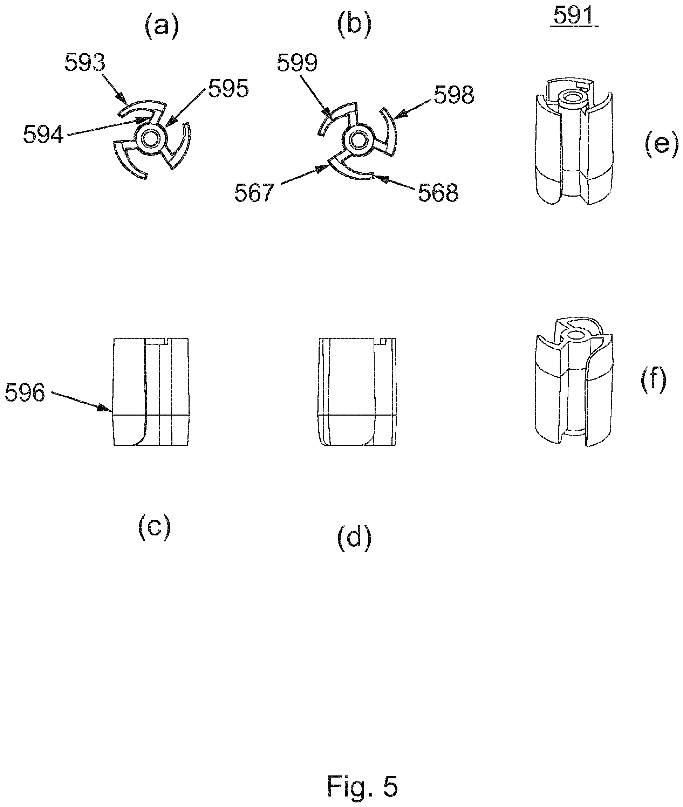

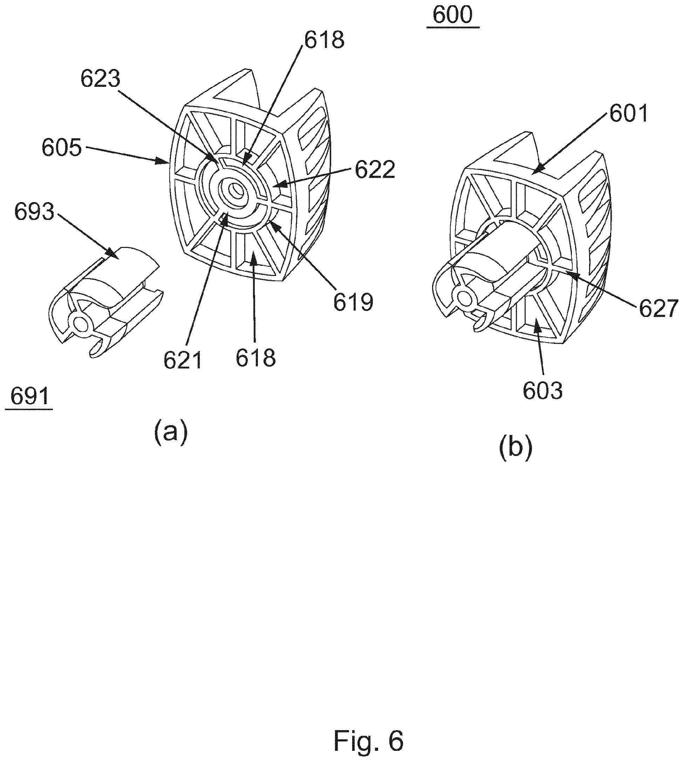

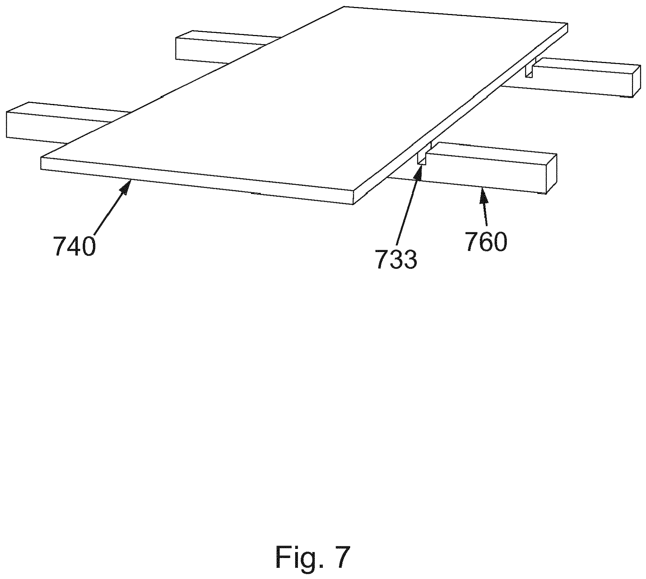

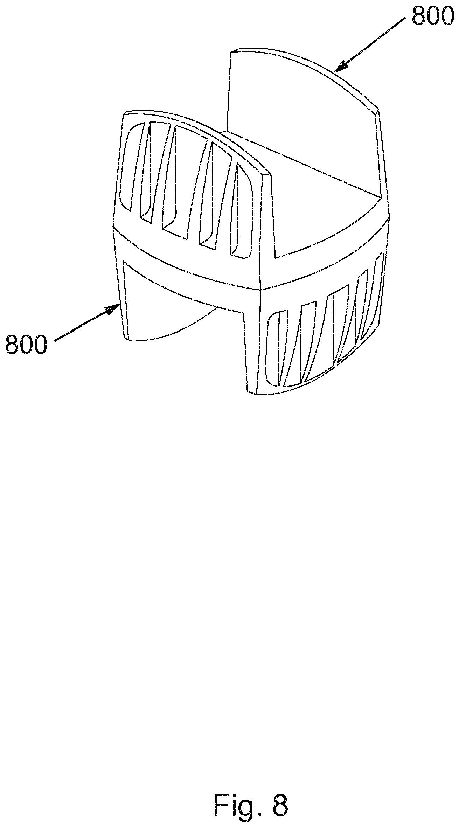

Referring to Fig. 1a-d, there is seen a representation of a top, end, top perspective, and bottom perspective view of an embodiment of a saddle of the present invention;
Referring to Fig. 2, there is seen a perspective representation of four saddles used to support lumber and wood over at least one working surface;
Referring to Fig. 3, there is seen another representation of the present invention being used to support lumber over a single working surface 350;
Referring to Fig. 4, there are seen representations of two embodiments of fasteners and their use to secure saddles to a working surface;
Referring to Figs. 5a-f, there are seen top, bottom, side and perspective representations of a second fastener;
Referring to Figs. 6a-b, there is seen a representation of a bottom perspective view of an embodiment of a saddle and a second fastener;
Referring to Fig. 7, there is seen a representation of sacrificial use of lumber used to support a workpiece; and
Referring to Fig. 8, there is seen a representation of an embodiment of two saddles joined together.

### Summary of the Invention

Throughout the course of discussion that follows, certain terms are used throughout such as "top", "bottom", "upper", "lower", "side", "front", "rear" and the like. These terms provide a suitable frame of reference with regard to the accompanying drawings, but are not intended to overly limit of the inventive concepts that are described herein, except where specifically and notably indicated.

The invention is inclusive of combinations of the embodiments or embodiments described herein. References to "a particular embodiment" or "embodiment" and the like refer to features that are present in at least one embodiment of the invention. Separate references to "an embodiment" or "particular embodiments" or "embodiments" or the like do not necessarily refer to the same embodiment or embodiments; however, such embodiments are not mutually exclusive, unless so indicated or as are readily apparent to one of skill in the art. The use of singular or plural in referring to "method" or "methods" and the like is not limiting.

As used herein, the term working surface is intended to refer to one or more surfaces over which and to which a saddle of the present invention is to be used and coupled to, and the term workpiece is intended to refer to an item to be supported by the saddle over the working surface. The present invention is directed to inexpensive saddles that can be used to hold one or more work items or workpieces over a working surface. The saddle can be fastened to maintain its lateral position and orientation on the working surface. Pairs of saddles can be used to hold inexpensive and easily available lumber to create a support structure, upon which the work item can be placed horizontally. A lattice of the lumber can be used to ensure that the item and any offcuts are complete supported throughout working tool operation(s). The lumber used to create the support structure can be used in a sacrificial manner such that it can be cut when the item is being through-cut, and be replaced when needed.

The saddles can be fastened to maintain their position on the working surface via protruding fasteners. Versions of the fasteners can be screws or posts. When a post is used, the post can be configured to flexibly compress to fit snugly into and be retained in commonly dimensioned dog post holes, for example, 19mm (¾") or 20 mm diameter dog post holes.

When the saddle is attached to an appropriately dimensioned post, it enables the saddles to be used with common woodworking fixtures which utilize dog holes (e.g., workbench, workmate), or other working surfaces.

A saddle, or saddle with a post provides a solution that allows the creation of a stable, elevated assembly to support work items in a wide variety of locations and environments. Its small size and rapid configuration enable the assembly to be easily stored, quickly set up when needed, and configuration of saddles changed easily as desired.

With the present invention, contact with a working surface by tools (circular saw, jigsaws, saws, routers, drills, cutters, etc.) used on an item supported over the working surface is minimized as is the opportunity to damage the tool. In addition, the present invention enables a space to be formed beneath the work item for accessory tools such as clamps to be used on the workpiece. The present invention also allows users to safely work with their tools, without having to worry about supporting workpieces with a free hand.

In one embodiment, the invention comprises: a method of supporting an item over one or more working surfaces, comprising the steps of:
providing a first platform, the first platform comprising a top side, a bottom side, two opposite walls extending from the top side of the platform, and a first fastening structure extending from the bottom side, wherein the two opposite walls define a first channel and are disposed about a central first longitudinal axis;
providing a second platform, the second platform comprising a top side, a bottom side, two opposite walls extending from the top side of the platform, and a second fastening structure extending from the bottom side, wherein the two opposite walls define a second channel and are disposed about a central second longitudinal axis;
providing a third platform, the third platform comprising a top side, a bottom side, two opposite walls extending from the top side of the platform, and a third fastening structure extending from the bottom side, wherein the two opposite walls define a third channel and are disposed about a central third longitudinal axis;
providing a fourth platform, the fourth platform comprising a top side, a bottom side, two opposite walls extending from the top side of the platform, and a fourth fastening structure extending from the bottom side, wherein the two opposite walls define a fourth channel and are disposed about a central second longitudinal axis;
positioning the first, second, third and fourth platforms over the one or more working surface;
securing the first, second, third and fourth platforms over the one or more working surface via their respective fastening structures;
positioning a first piece of lumber between the two opposite walls of the first platform and the two opposite walls of the second platform; and
positioning a second piece of lumber between the two opposite walls of the third platform and the two opposite walls of the fourth platform.

The one or more working surfaces may consist of a single surface. The one or more working surfaces may comprise at least two working surfaces. The steps of positioning may include aligning the longitudinal axis of the first platform and the longitudinal axis of the second platform to respective longitudinal axes defined by the ends of the first piece of sacrificial material (for example but not limited to lumber, foam sheets, foam pieces, cardboard tubes and other suitable materials), and aligning the longitudinal axis of the third platform and the longitudinal axis of the fourth platform to respective longitudinal axes defined by the ends of the second piece of sacrificial material (for example but not limited to lumber, foam sheets, foam pieces, cardboard tubes and other suitable materials). The steps of aligning may comprise rotating the first, second, third and fourth platforms about a longitudinal axis defined by their respective fastening structure. The invention may further comprise a step of placing the item on the first piece of lumber and the second piece of lumber. The invention may further comprise performing an operation on the item, the operation selected from the group comprising: cutting, sawing, drilling and routing. The operation may be performed without damaging the one or more working surface.

The apparatus may comprise an apparatus for supporting an item over a working surface, comprising: a first platform comprising a top side, a bottom side, two opposite walls extending from the top side of the platform, and a first fastener extending from the bottom side, wherein the first fastener comprises one or more curved outer surface, wherein the top side and two opposite walls define a first channel configured to receive the wood within the channel, wherein the apparatus is configured such that with the first fastener inserted into an opening in the working surface, lateral movement of the first platform relative to the working surface is limited. In one embodiment, the first fastener is selected from the group consisting of a screw, a nail, an expansion pin, a bolt, a rivet and a post comprised of one or more structure. In one embodiment, the first fastener comprises a top end and a bottom end, wherein the top end of the first fastener is coupled to the bottom side of the platform. In one embodiment, the first fastener comprises a top end and a bottom end, wherein the top end is coupled to the bottom side platform by a second fastener. In one embodiment, the second fastener is selected from the group consisting of: screw, a nail, an expansion pin and a bolt. In one embodiment, the first platform comprises at least one opening, and wherein the first platform is coupled to the first fastener via the at least one opening. In one embodiment, the two opposite walls of each channel are flexible.

The present specification discloses a system for supporting an item over a working surface, comprising: a first platform comprising a top side, a bottom side, two opposite walls extending from the top side of the platform, at least one opening, and a first fastener, wherein the top side and two walls define a first channel, wherein the first platform is configured such that with the first fastener inserted into the at least one opening of the first platform and an opening in a working surface the first platform is fixedly rotatable about a longitudinal axis of the first fastener; and a second platform comprising a top side, a bottom side, two opposite walls extending from the top side of the platform, at least one opening, and a second fastener, wherein the top side and two walls define a second channel, wherein the second platform is configured such that with the second fastener inserted into the at least one opening of the second platform and an opening in the working surface the second platform is fixedly rotatable about a longitudinal axis of the second fastener. In one embodiment, the first and second fastener each comprise at least one outer wall that is flexible. In one embodiment, the two opposite walls are flexible. In one embodiment, the two walls of the channel comprise surfaces that are not parallel. In one embodiment, the two walls comprise surfaces that define surfaces of ribs that provide support to the two opposite walls. In one embodiment, the first fastener and the second fastener each comprise a flexible post, where the post is flexible in its diameter and not in along its central axis. In one embodiment, the system further comprises a piece of 1-by or 2-by lumber, and wherein the first channel and the second channel are configured to receive and snugly retain the lumber.

The present specification discloses: a system for supporting and item, comprising: a first platform comprising a top side, an opposite bottom side, and two opposite walls extending from the top side of the platform, wherein the top side and two opposite walls define a first channel configured to receive the wood within the recess; and a second platform comprising a top side, an opposite bottom side, and two opposite walls extending from the top side of the platform, wherein the top side and two opposite walls define a second channel configured to receive the wood within the recess, wherein the bottom side of the first and second platform is defined by a perimeter that has four sides with the same shape. The bottom side of the first platform may be joined to the bottom side of the second platform. In one embodiment the invention further comprises a fastener, wherein the first platform comprises a first opening and the second platform comprise a second opening, and wherein the bottom side of the first platform is joined to the bottom side of the second platform via insertion of a fastener in the first opening and the second opening.

The present specification discloses: a kit for supporting an item over a working surface, comprising: a container for holding at least one piece of lumber; at least two platforms, each platform comprising a top side, a bottom side, two opposite walls extending from the top side of the platform, and an opening, wherein: the two opposite walls define a channel configured to receive and snugly retain the lumber; and at least 2 fasteners, each fastener configured to be coupled to a respective platform via the opening. In one embodiment, the invention further comprises least 2 posts, each configured to be coupled to the bottom side of a respective platform. The at least one piece of lumber may selected from the group consisting of: 1-by and 2-by lumber. In one embodiment, the container comprises a soft bag configured to carry the lumber either entirely within the bag or partially within the bag.

In the following description, reference is made to 1-by and 2-by lumber. These represent standard lumber thicknesses prevalent in North America. It will be appreciated that modification of the dimensions mentioned to accommodate standard lumber thicknesses for European markets is within the scope of the invention.

### Detailed Description

Referring to Fig. 1a-d there is seen a representation of a top, end, top perspective, and bottom perspective view of an embodiment of a saddle of the present invention. In one embodiment, saddle 100 comprises a top end 114, a bottom end 115, and a platform 101 having respective top 116 and bottom 103 sides. In one embodiment, saddle 100 defines one or more open space or aperture above, below, and/or within top side 116. In one embodiment, saddle 100 defines an open space in the form of a channel 120. In one embodiment, saddle 100 defines an open space in the form of an aperture 104 that extends through platform 101 between top 116 and bottom 103 sides and that is centrally disposed with respect to an exterior peripheral wall 105 of platform 101. As described further below, in one embodiment, saddle 100 also comprises one or more open space or aperture below bottom side 103.

Saddle 100 further comprises two walls 102 on either side of channel 120, with each wall comprised of an inner surface 110 and an external surface 137 coupled to and extending from the platform 101 to the top end 114. In one embodiment, inner surface 110 is a planar surface that has a width that is longer in a horizontal longitudinal direction than its height in a vertical direction. In one embodiment, the two walls 102 are supported by a plurality of ribs 106. Ribs 106 comprise a horizontal thickness between the inner surface and the external surface that decreases in an upward direction from the platform such that the ribs 106 provide less lateral resistance to forces applied orthogonally to the walls 102 at their top end 114 than at their bottom end 115, which enable the walls to flex more at their top than at their bottom. In one embodiment, walls 102 are not parallel to each other. In one embodiment, each inner surface 110 is oriented at an angle that is slightly angled toward the center of the platform 101. In exemplary embodiments, a distance between the inner surfaces 110 is dimensioned to accommodate standardized 1-by or 2-by width lumber, for example, but not limited to, 1x2, 1x3, 1x4, 2x2, and 2x3 lumber. In one embodiment, each inner surface 110 has a bottom end 111 and a top end 112, where in an exemplary embodiment, a distance between the inner surfaces 110 at respective bottom ends 111 is ∼38mm (1.51 inches) and a distance between inner surfaces 110 at respective top ends 112 is ∼37mm (1.45 inches), which dimensions those skilled in the art will identify as being approximately that of the nominal widths of 2x2, 2x3 and 2x4 lumber. In another exemplary embodiment, a distance between inner surfaces 110 at respective bottom ends 111 is ∼19.3mm (0.76 inches) and a distance between inner surfaces at respective bottom ends 112 is ∼17.8mm (0.70 inches), which dimensions those skilled in the art will identify as being approximately that of the nominal widths of 1x2, 1x3 and 1x4 lumber. Although saddle 100 can be dimensioned to accept other sized lumber, the exemplary dimensions above have been identified as being preferred as they enable easily and commonly available on-site lumber to be found and used to quickly set up saddles as is described further below. In exemplary embodiments, the material comprises a hard plastic and/or polymer, for example, a polypropylene impact copolymer. In an embodiment of manufacture, saddle 100 is molded using techniques known to those skilled in the art.

Although in Fig. 1 four sides of the periphery 105 of saddle 100 have the same geometry, other peripheral geometries are within the scope of the present invention, including those provided to the embodiments in Figs. 2, 4, and 5 below, where a geometrical shape provided to one pair of opposite sides of the periphery 105 is different from a geometrical shape provided to the other pair of opposite sides of the periphery.

Further, although in one embodiment the inner surfaces of saddle 100 have been described to be non-parallel, it is contemplated in other embodiments that the two surfaces can be configured to be parallel.

Referring to Fig. 2 there is seen a perspective representation of four saddles used to support lumber and wood over at least one working surface. In one embodiment, saddle 200a is configured to receive and snugly retain lumber 260a in a channel defined by walls of the saddle (see description of walls 102, inner surfaces 110, and channel 120 in Fig. 1 above), where after insertion of lumber 260a within the saddle, saddle 200a is configured to support a work item 240 above a working surface 250a. In one embodiment, 240 comprises wood. Although 240 is discussed in the context of wood below, it will be appreciated that other work items are within the scope of use of the present invention, including drywall, plywood, plastic, composites and other well known in the art.

In an exemplary embodiment, where lumber 260a is a 1x3 piece of lumber (which is known to those skilled in the art to actually comprise a dimension 19mmx64mm (0.75x2.5 inches)) and a distance between bottom ends of the inner surfaces of the channel of saddle 200a is 19.3mm (0.76 inches), and a distance between top ends of the inner surfaces of the channel of saddles 200a is 17.8mm (0.70 inches), lumber 260a is received between inner surfaces of channel 120 via an increase in the distance between the top end of the walls of the saddle that is enabled by flexing of the top of the walls of the saddle. In one embodiment of use, a distance between the walls 102 is increased via a slight back and forth rocking of lumber 260a along its longitudinal axis during downward movement of the lumber between the walls and toward the platform, where when the downward movement of the lumber is continued, the lumber 260a eventually rests and abuts the platform and is snugly retained by and between the walls of the saddle.

Further with reference to Fig. 2, a second saddle 200b is also configured to support lumber 260a and wood 240 over a working surface 250b in a manner similar to that described above with reference to saddle 200a.

Further with reference to Fig. 2, a third saddle 200c and a fourth saddle 200d are also configured to support lumber 260b and wood 240 over a working surface in a manner similar to that described above with reference to saddles 200a and 200b.

Although, Fig. 2 represents one particular configuration of saddles, lumber, and working surfaces, the present invention contemplates use in many other configurations and orientations. For example, in one embodiment, to accommodate a larger or heavier piece of wood, three pieces or more of lumber could be oriented parallel to each other over three or more working surfaces.

Referring now to Fig. 3, there is seen another representation of the present invention being used to support lumber over a single working surface. Fig. 3 encompasses embodiments that differ from those in Fig 2 in that, instead of being implemented to support wood 340 over two working surfaces 250a and 250b, wood 340 is supported over only one working surface 350.

In one embodiment of use, it is identified that lumber can be supported over a working surface with respective channels of at least two saddles oriented parallel with respect to each other. In another embodiment of use, it is identified that support over a working surface can be provided with respective channels of at least two saddles oriented co-linear with respect to each other. In another embodiment of use, it is identified that lumber used by the present invention does not necessarily need to be straight from end to end, as respective saddles used to receive ends of lumber can be easily oriented relative to one another to provide support to curved or slightly warped lumbers, albeit, with respective channels of the supports not being oriented co-linear with respect to each other.

In one embodiment, working surface 350 comprises a wood floor, for example, a wood floor of a structure or house under construction. In other embodiments, working surface 350 may comprise decking or a work bench.

Referring now to Fig. 4, there are seen representations of two embodiments of fasteners and their use to secure saddles to a working surface. It is identified saddles as described above will be exposed to forces, for example, forces that can be applied by lumber retained by the saddle, a working surface the saddle is placed on, and/or wood placed on the lumber, which forces can cause undesired lateral or tipping movements of the saddle with respect to other saddles and/or the working surface. As described below, use saddles according to the present invention are configured to resist such lateral and/or tipping movements.

In one embodiment, saddle 400a is configured to resist lateral and tipping movements when placed onto a working surface 450 via use with a first fastener 490. In one embodiment, first fastener 490 comprises a screw. In other embodiments, fastener 490 comprises a nail, an expansion pin, a bolt, a rivet, or the like. In one embodiment, saddle 400a is configured to receive a bottom side and then a top side first fastener 490 through platform 401. In one embodiment, saddle 400a is configured to receive first fastener 490 through a preformed aperture in saddle 400a. In one embodiment of use, a saddle 400a is placed onto working surface 450 and a first fastener 490 is inserted through platform 401 until it extends below bottom end 415 of the saddle and into the working surface 450 at 451. Subsequently, as needed, saddle 400a can be rotated about first fastener 490 to a desired orientation relative to another saddle so as to enable ends of a piece of lumber to be inserted in both saddles without lateral movement and/or tipping of the lumber or the saddles.

In another embodiment, saddle 400b is configured to restrain lateral movement of the saddle when placed onto a working surface 450 via use with a second fastener 491. In one embodiment, saddle 400b is coupled to second fastener 491 via an aperture formed in the saddle. In one embodiment, the aperture in the saddle 400b is preformed in the platform of the saddle. In one embodiment, saddle 400b is coupled to second fastener 491 via insertion of a third fastener 492 through the platform of the saddle. In one embodiment of use, a coupled combination of saddle 400b and second fastener 491 is placed over a preformed opening 497 in a working surface 450, and the second fastener 491 is inserted into the preformed opening 497 until the bottom end of the saddle 400b rests against the working surface 450. Subsequently, as needed, saddle 400b can be rotated to a desired orientation so that its channel is aligned with a channel of another saddle to enable lumber to be inserted in both saddles without lateral movement and/or tipping as described above.

Referring now to Figs. 5a-f, there are seen top, bottom, side and perspective representations of a second fastener. In one embodiment, second fastener 591 comprises a post like structure that includes an outer structure 593, an inner structure 595, and an intermediate structure 594 that couples the outer and inner structures to each other. In one embodiment, inner structure 595 comprises a top and a bottom surface that define a height, and one or more outer surface that extends between the top and bottom. In one embodiment, intermediate structure 594 is comprises a plurality of ribs having a top and a bottom surface that define a vertical height of the ribs, and opposing opposite surfaces between the top and bottom of each rib that define a thickness. In one embodiment, outer structure 593 comprises a plurality of wings having an outer 598 and inner 599 surface that define a thickness, and a top and bottom that defines a vertical height of each wing. In one embodiment, outer structure 593 comprises three wings. In one embodiment, each wing is defined by outer surface that is curved between a left edge 567 and a right edge 568. In one embodiment, each wing increases in thickness when measured from the right edge 568 to the left edge 567. In one embodiment, a position of left edge 567 lies along and is defined by a first circle, and a position of right edge 568 lies along and is defined by a larger concentric second circle. In an exemplary embodiment, a diameter of the first larger circle is 20mm in diameter and the second circle is 19.05 mm in diameter. In one embodiment, a diameter of the second fastener 591 at its bottom end gradually increases when measured from the bottom end to some point 596 along its height. In one embodiment, inner surface 599 of each wing 593 is coupled to inner structure 595 by the ribs. In one embodiment, the height of each rib is less than the height of the post inner structure 595. In one embodiment, the top of each wing 593 is disposed in a common plane, and the top surface of the inner structure 595 is disposed in a plane that is below the plane each wing is disposed in. In exemplary embodiments, second fastener 591 comprises a hard plastic and/or polymer material. In an embodiment of manufacture, second fastener 591 is molded using techniques known to those skilled in the art.

Referring now to Figs. 6a-b, there is seen a representation of a bottom perspective view of an embodiment of a saddle and a second fastener. In one embodiment, saddle 600 defines open spaces, for example, see two spaces pointed to by arrows 618. In one embodiment, the spaces 618 are defined by a bottom side 603 of platform 601 and a plurality of structures 619. In one embodiment, a top end of each structure 619 is coupled to and extends from bottom side 603 of the platform 601, and a second bottom end 627 terminates along a plane that is coplanar with a plane that defines a bottom end of saddle 600. In one embodiment, the plurality of structures 619 comprise ribs configured to provide vertical support to platform 601 and/or lateral support to peripheral wall 605 of saddle 600.

In one embodiment, structures 619 comprise an inner wall 621 and an outer wall 622 disposed within a peripheral wall 605 of saddle 600. In one embodiment, structures 619 comprise one or more connecting portion 623, where inner wall 621 and outer wall 622 are joined by the one or more connecting portion. In one embodiment, inner wall 621 and outer wall 622 define a ring shape. In one embodiment, inner wall 621, outer wall 622, and one or more connecting portion 623 define one or more spaces or apertures 618 that have a shape that are configured to accommodate insertion of the top ends of the wings of second fastener 691. For example, in one embodiment, spaces 618 defined by the inner wall 621 and outer wall 622 are curved to accommodate curved outer 698 and inner 699 surfaces at the top ends of wings 693.

In one embodiment of use, top ends of wings 693 of a second fastener 691 are inserted into apertures 618 defined by the inner wall 621 and outer wall 622, and subsequently a first fastener (see first fastener 490 in Fig. 4) is inserted through platform 601 and into a receiving aperture formed in an inner structure of the second fastener 691 to fixedly retain the second fastener 691 to saddle 600. In another embodiment of use, after top ends wings 693 of a second fastener 691 are inserted into apertures 618 defined by the inner wall 621 and outer wall 622, the top ends may fixedly retained by the platform 601 without a need for a first fastener, for example, via the use of adhesive or a snap in structure.

In another embodiment of use, a second fastener 691 having a 21 mm upper outer diameter above point 596 (see Fig. 5) and a 20 mm outer diameter at its bottom is coupled to saddle 600 is inserted into a 20 mm hole of a working surface such that the 20 mm diameter of the second fastener 691 initially fits into the 20 mm hole with only slight resistance. Subsequent insertion of the second fastener 691 past point 596 (see Fig. 5) causes the right edges 598 of each wing 593 of the second fastener 691 to compress radially inward in a manner that the 21 mm diameter of the second fastener is flexibly reduced to 20 mm. After full insertion, the bottom end of the saddle 600 comes to rest against the working surface, at which point the second fastener 691 and thus the saddle 600 are retained within the working surface in a manner that lateral movement and tipping of the saddle is prevented. It is identified that flexibility and compressibility that is provided by the material, geometry, and dimensions of the second fastener 691 enables one second fastener to be used in a range of different sized holes. For example in one embodiment, second fastener 591 is flexible and compressible enough to provide a snug fit in both 19mm (¾") and 20 mm holes.

With reference to Fig. 7, there is seen a representation of sacrificial use of lumber used to support a workpiece. In some aspects, foam sheets or foam pieces of different densities and properties (e.g. styrofoam, insulation foam, etc.), cardboard tubes of various shapes (e.g. triangles, polygons, circular, etc.) may be used as a sacrificial material in place of the lumber. In one embodiment, a workpiece 740 is placed over lumber 760 that is retained by saddles as is described above. Because workpiece 740 is supported by lumber 760, damage to the working surface underneath resulting from operations performed on the workpiece can be eliminated. Because user damage to working surfaces can be counted on to be reduced, operations on the workpiece 740 can be performed much more quickly. For example, with a sheet of plywood 740 placed over lumber 760, a circular saw can be used to rapidly trim or cut the plywood one or more times without worry that damage to an underlying working surface will occur. However, with the present invention damage that would otherwise have occurred to a working surface without use of the present invention will now be inflicted on the lumber 760. For example, when cutting sheets of plywood with a circular saw, it is typically desired to set cutting blade depth to be slightly greater than the thickness of the plywood. Subsequently, when making the cuts in the plywood, it is understood with traversal of the cutting blade over the plywood and the lumber 760 beneath it, the slightly greater depth of the cutting blade could also cut through the lumber supports (see cut at 733). However, because the slightly greater depth of the cutting blade would typically be much smaller than the overall height of the lumber 760, the lumber would be able absorb many such cuts 733 in a sacrificial manner before losing its structural ability to provide support to the plywood 740, where when it is determined to replace lumber 760, it is identified that it can easily and quickly be replaced. In a further embodiment of use, in an instance where plywood 740 is positioned over a saddle and where saddles are made of plastic or other sacrificial material, it is identified that the saddles could also absorb one or more cuts from a cutting blade before losing their functionality.

Referring to Fig. 8, there is seen a representation of an embodiment of two saddles joined together. In an embodiment where four peripheral walls of a saddle 800 comprise the same symmetrical shape, it is identified that the saddles 800 can be mated to each other via their bottom ends. In one embodiment of use, after mating, the two saddles can be fastened via a fourth fastener placed through one or both platforms of both saddles (i.e. via a screw, bolt, nut or the like), and the channels of each saddle oriented parallel or orthogonal to each other before final fastening of the fastener. Such an arrangement allows the saddle to engage with lumber above and below the saddle, enabling erection of higher (and optionally cross-braced) support structures.

In the application from which this claims priority the following features were claimed and are repeated to provide basis for subsequent amendment or divisionals as necessary

### Features

1. A method of supporting an item over one or more working surface, comprising the steps of:
   providing a first platform, the first platform comprising a top side, a bottom side, two opposite walls extending from the top side of the platform, and a first fastening structure extending from the bottom side, wherein the two opposite walls define a first channel and are disposed about a central first longitudinal axis;
   providing a second platform, the first platform comprising a top side, a bottom side, two opposite walls extending from the top side of the platform, and a second fastening structure extending from the bottom side, wherein the two opposite walls define a second channel and are disposed about a central second longitudinal axis;
   providing a third platform, the third platform comprising a top side, a bottom side, two opposite walls extending from the top side of the platform, and a third fastening structure extending from the bottom side, wherein the two opposite walls define a third channel and are disposed about a central third longitudinal axis;
   providing a fourth platform, the fourth platform comprising a top side, a bottom side, two opposite walls extending from the top side of the platform, and a fourth fastening structure extending from the bottom side, wherein the two opposite walls define a fourth channel and are disposed about a central second longitudinal axis;
   positioning the first platform over the one or more working surface;
   positioning the second platform over the one or more working surface;
   positioning the third platform over the one or more working surface;
   positioning the fourth platform over the one or more working surface;
   securing the first platform over the one or more working surface via the first fastening structure;
   securing the second platform over the one or more working surface via the second fastening structure;
   securing the third platform over the one or more working surface via the third fastening structure;
   securing the fourth platform over the one or more working surface via the fourth fastening structure; and positioning a first piece of sacrificial material between the two opposite walls of the first platform and the two opposite walls of the second platform; and
   positioning a second piece of sacrificial material between the two opposite walls of the third platform and the two opposite walls of the fourth platform.
2. The method of feature 1, wherein the one or more working surface consists of a single surface.
3. The method of feature 1, wherein the one or more working surface comprises at least two working surfaces.
4. The method of feature 1, wherein the steps of positioning include aligning the longitudinal axis of the first platform and the longitudinal axis of the second platform to respective longitudinal axes defined by the ends of the first piece of sacrificial material, and aligning the longitudinal axis of the third platform and the longitudinal axis of the fourth platform to respective longitudinal axes defined by the ends of the second piece of sacrificial material.
5. The method of feature 1, wherein the steps of aligning comprise rotating the first, second, third and fourth platforms about a longitudinal axis defined by their respective fastening structure.
6. The method of feature 1, further comprising a step of placing an item on the first piece of sacrificial material and the second piece of sacrificial material.
7. The method of feature 1, further performing an operation on the item, the operation selected from the group comprising: cutting, sawing, drilling, and routing.
8. The method of feature 6, wherein the operation does not damage the one or more working surface.
9. An apparatus for supporting an item over a working surface, comprising:
   a first platform comprising a top side, a bottom side, two opposite walls extending from the top side of the platform, and a first fastener extending from the bottom side, wherein the first fastener comprises one or more curved outer surface, wherein the top side and two opposite walls define a first channel configured to receive a sacrificial material within the channel, wherein the apparatus is configured such that with the first fastener inserted into an opening in the working surface, lateral movement of the first platform relative to the working surface is limited.
10. The apparatus of Feature 9, wherein the first fastener is selected from the group consisting of a screw, a nail, an expansion pin, a bolt, a rivet and a post comprised of one or more structure.
11. The apparatus of feature 9, wherein the first fastener comprises a top end and a bottom end, wherein the top end of the first fastener is coupled to the bottom side of the platform.
12. The apparatus of feature 9, wherein the first fastener comprises a top end and a bottom end, wherein the top end is coupled to the bottom side platform by a second fastener.
13. The apparatus of feature 12, wherein the second fastener is selected from the group consisting of: screw, a nail, an expansion pin and a bolt.
14. The apparatus of feature 9, wherein the first platform comprises at least one opening, and wherein the first platform is coupled to the first fastener via the at least one opening.
15. The apparatus of feature 9, wherein the two opposite walls of the platform are flexible.
16. A system for supporting an item over a working surface, comprising:
   a first platform comprising a top side, an bottom side, two walls extending from the top side of the platform, at least one opening, and a first fastener, wherein the top side and two opposite walls define a first channel, wherein the first platform is configured such that with the first fastener inserted into the at least one opening of the first platform and a first opening in a working surface the first platform is fixedly rotatable about a longitudinal axis of the first fastener; and
   a second platform comprising a top side, an bottom side, two walls extending from the top side of the platform, at least one opening, and a second fastener, wherein the top side and two opposite walls define a second channel, wherein the second platform is configured such that with the second fastener inserted into the at least one opening of the second platform and as second opening in the working surface the second platform is fixedly rotatable about a longitudinal axis of the second fastener.
17. The system of feature 16, wherein the first fastener and the second fastener each comprise a flexible post.
18. The system of feature 16, wherein the two walls of the channel comprise surfaces that are not parallel.
19. The system of feature 16, wherein the two walls comprise surfaces of at least one rib.
20. The system of feature 16, wherein the system further comprises a piece of 1-by or 2-by lumber, and wherein the first channel and the second channel are configured to receive and snugly retain the lumber.

## Claims

1. A method of supporting an item over one or more working surfaces (250a, 250b; 350; 450) comprising the steps of:
providing first, second, third and fourth platforms (101), each platform (101) comprising a top side (114)_, a bottom side (115), two opposite walls (102) extending from the top side (114) of the platform, and a fastening structure (490,491) extending from the bottom side, wherein the two opposite walls define a channel (120) and are disposed about a central longitudinal axis;
positioning the first, second, third and fourth platforms (101) over the one or more working surfaces;
securing the first, second, third and fourth platforms (101) over the one or more working surface via their respective fastening structures (490,491);
positioning a first piece of sacrificial material (260a) between the two opposite walls of the first platform and the two opposite walls of the second platform; and
positioning a second piece of sacrificial material (260b) between the two opposite walls of the third platform and the two opposite walls of the fourth platform.

2. A method as claimed in claim 1, wherein the steps of positioning include aligning the longitudinal axis of the first platform and the longitudinal axis of the second platform to respective longitudinal axes defined by the ends of the first piece of sacrificial material, and aligning the longitudinal axis of the third platform and the longitudinal axis of the fourth platform to respective longitudinal axes defined by the ends of the second piece of sacrificial material.

3. A method as claimed in claim 1 or claim 2, wherein the steps of positioning comprise rotating the first, second, third and fourth platforms about an axis defined by their respective fastening structures.

4. Apparatus for use in the method of any preceding claim comprising:-
• a platform comprising a top side, a bottom side, and two opposite walls extending from the top side of the platform, wherein the two opposite walls define a channel and are disposed about a central longitudinal axis,
• and a fastening structure extending in use from the bottom side .

5. Apparatus as claimed in Claim 4 wherein the two walls of the channel comprise surfaces that are not parallel.

6. Apparatus as claimed in Claim 5 wherein inner surfaces of the walls have respective bottom ends and top ends, and where the distance between the top ends is less than the distance between the bottom ends.

7. Apparatus as claimed in Claim 6, wherein the distance between the top ends is selected to hold lumber of a first standard dimension snugly, and the distance between the bottom ends is selected to hold lumber of a second standard dimension snugly.

8. Apparatus as claimed in any of Claims 4 to 7 wherein the opposite walls comprise at least one rib.

9. Apparatus as claimed any of Claims 4 to 8, wherein the two opposite walls of the platform are flexible.

10. Apparatus as claimed any of Claims 4 to 9, wherein the fastener comprises one or more curved outer surfaces, wherein the top side and two opposite walls define a first channel configured to receive a sacrificial material within the channel, wherein the apparatus is configured such that with the fastener inserted into an opening in the working surface, lateral movement of the platform relative to the working surface is limited.

11. Apparatus as claimed in any of Claims 4 to 10, wherein the fastener comprises a top end and a bottom end, wherein the top end is coupled to the bottom side platform by a second fastener.

12. Apparatus as claimed in any of Claims 4 to 11, wherein the platform is fixedly rotatable with respect to the fastener.

13. Apparatus as claimed in any of Claims 4 to 12, wherein the fastener comprises a flexible post.

14. Apparatus as claimed in Claim 13, wherein the flexible post is flexible and compressible enough to provide a snug fit in both 19mm (¾") and 20 mm holes.

15. Apparatus as claimed in any of Claims 4 to 14, wherein two platforms are mated to each other via their bottom ends.
